# EUROPEAN PATENT SPECIFICATION

(11) **EP 0 479 097 B1**
(45) Date of publication and mention of the grant of the patent: **27.03.1996**
(21) Application number: 91116228.7
(22) Date of filing: 24.09.1991
(51) Int. Cl.: B01J 2/14, C05C 11/00

(54) **Process for preparing water-sparingly soluble fertilizer granules**
Verfahren zur Herstellung von im Wasser schwerlöslichen Düngergranulaten
Procédé pour préparer des granules d'engrais difficilement soluble dans l'eau

(30) Priority: 25.09.1990 JP 254789/90
(43) Date of publication of application: 08.04.1992
(73) Proprietor: UBE INDUSTRIES, LTD., Ube-shi, Yamaguchi-ken 755 (JP); UBE COMPOUND CHEMICAL FERTILIZER MEG. CO., LTD., Ube-shi Yamaguchi-ken (JP)
(72) Inventor: Hoshide, Hiroshi, c/o Ube Industries, Ltd., Ube-shi, Yamaguchi-ken (JP); Takada, Yutaka, c/o Ube Industries, Ltd., Ube Res., Oki, Ube, Ube-shi, Yamaguchi-ken (JP); Tsuboi, Koichi, c/o Ube Chemical Works, Ube-shi, Yamaguchi-ken (JP); Okazaki, Akihiko, c/o Ube Compound Chemical, Ube-shi, Yamaguchi-ken (JP)
(74) Representative: Kraus, Walter, Dr.

(56) References cited:
- EP-A- 0 370 532
- DE-A- 3 446 520
- US-A- 2 357 941
- US-A- 4 343 751
- PATENT ABSTRACTS OF JAPAN vol. 14, no. 330 (C-741)(4273) 16 July 1990

## Description

### BACKGROUND OF THE INVENTION

The present invention relates to a process for preparing fertilizer granules which are sparingly soluble in water.

Fertilizers containing slow release fertilizer components having low solubility in water in a high concentration have been desired to save labor for fertilization. Further, it has been also desired to granulate the fertilizers into granules having sufficient hardness so as not to powder in fertilization using machines and having high fluidity.

A water-sparingly soluble fertilizer composition containing water-sparingly soluble organic fertilizers such as oxamide [(CONH₂)₂], colza oil dregs or fish dregs or water-sparingly soluble inorganic fertilizers such as magnesium ammonium phosphate, fused phosphate, potassium silicate or diatomaceous earth shows low bonding (adhesion) force in the granulation stage and low bonding strength in the drying stage because the composition has a low solubility in water. Accordingly, even if a trial for obtaining granules from the composition utilizing a conventional rolling granulating process or a conventional fluid granulating process is made, granules having such favorable hardness as not to powder in the mechanical handling could be hardly obtained. Further, granules obtainable by granulation of the water-sparingly soluble fertilizers utilizing compression molding process are in the shape of pellets or briquets, and such granules have high hardness immediately after the preparation thereof, but they have low fluidity owing to their specific shapes and are easily destroyed at their corner portions and easily powder in the mechanical fertilization.

Slow release fertilizers in the shape of granules or spherical particles which comprise an oxamide powder bonded by polyvinyl alcohol are known as described in Japanese Patent Provisional Publications No. 59(1984)-169527 and No. Hei 2(1990)-145493 which were filed by the present applicant. These slow release fertilizers have high hardness and hardly powder in the handling procedure, and further they have high fluidity. That is, they have excellent properties suitable for mechanical fertilization. However, the slow release fertilizers contain a polyvinyl alcohol binder which has no effect as a fertilizer and costs high, and the preparation of the slow release fertilizers needs a number of steps including steps of mixing, kneading and granulating. Therefore, these slow release fertilizers are somewhat disadvantageous in productivity and cost performance.

### SUMMARY OF THE INVENTION

It is an object of the present invention to provide a process for preparing water-sparingly soluble fertilizer granules in which granules of spherical shapes having both of excellent fluidity and sufficient hardness for handling can be easily and efficiently prepared from a water-sparingly soluble fertilizer powder and water by a simple process without using a viscosity increasing agent or a binder.

The present invention resides in a process for preparing water-sparingly soluble fertilizer granules, at least 45 weight % of which have a grain size of 2-4 mm, comprising the steps of:
charging a water-sparingly soluble fertilizer powder and water into a granulator comprising at least a bottomed cylindrical container which is rotatable and has an outlet at the center of the bottom, an agitator provided in the container at an eccentric position from the rotational center of the container, and a mixing scraper arranged in the container eccentrically from the rotational center of the container so that it does not disturb the rotation of the agitator;
rotating the container, with rotating the agitator at a high speed (namely, high outer periphey speed of not lower than 1,000 m/min.) reversely of the rotation of the container, and keeping the mixing scraper unrotated or rotating it reversely of the rotation of the container, to mix and knead the powder with the water so as to produce granules;
then rotating the agitator at a low speed (namely, low outer periphery speed of not higher than 900 m/min.) reversely of the rotation of the container to adjust the size of the granules to form water-sparingly soluble fertilizer granules of desired size; and
then drying the granules.

The process for preparing water-sparingly soluble fertilizer granules according to the present invention show such prominently excellent effects that spherical granules of a water-sparingly soluble fertilizer having sufficient hardness for handling and excellent fluidity can be easily and efficiently prepared from a water-sparingly soluble fertilizer powder and water without using a viscosity increasing agent or a binder.

The water-sparingly soluble fertilizer granules prepared by the process of the invention can be per se used as a fertilizer or can be used as a component material of a fertilizer composition or a fertilizer for bulk blend.

Preferred embodiments of the present invention are as follows.
(1) The above process for preparing water-sparingly soluble fertilizer granules which is characterized in that the rotational speed (rate) of the container is in the range of 20 to 150 m/min in terms of an outer periphery speed thereof, the rotational speed of the mixing scraper is in the range of 0 to 300 m/min in terms of an outer periphery speed thereof, the rotational speed of the agitator in the high-speed rotating procedure is in the range of 1,000 to 2,500 m/min in terms of a blade-outer periphery speed thereof, and the rotational speed of the agitator in the low-speed rotating procedure is in the range of 300 to 900 m/min in terms of a blade-outer periphery speed thereof.
(2) The above process for preparing water-sparingly soluble fertilizer granules which is characterized in that a mean particle diameter of the powder is not more than 1 mm.
(3) The above process for preparing water-sparingly soluble fertilizer granules which is characterized in that the amount of the water used for the powder in the high-speed rotating procedure of the agitator is in the range of 20 to 40 parts by weight per 100 parts by weight of the powder.
(4) The above process for preparing water-sparingly soluble fertilizer granules which is characterized in that the powder is further added in the low-speed rotating procedure of the agitator to make the amount of the water used for the powder in the range of 20 to 30 parts by weight per 100 parts by weight of the powder when the low-speed rotation of the agitator is completed.
(5) The above process for preparing water-sparingly soluble fertilizer granules which is characterized in that the high-speed rotation of the agitator is conducted until most of a mixture of the powder and the water becomes granules having a major diameter of 0.5 to 3 mm, and the low-speed rotation of the agitator is conducted until most of the granules become granules having a major diameter of 2 to 4 mm.

### BRIEF DESCRIPTION OF DRAWINGS

Fig. 1 is a plan view schematically illustrating an essential part of one example of granulators employable in the process of the invention.

Fig. 2 is a sectional view of the granulator shown in Fig. 1 taken along line I-I.

### DETAILED DESCRIPTION OF THE INVENTION

A granulator employable in the process of the invention is described below referring to the attached drawings.

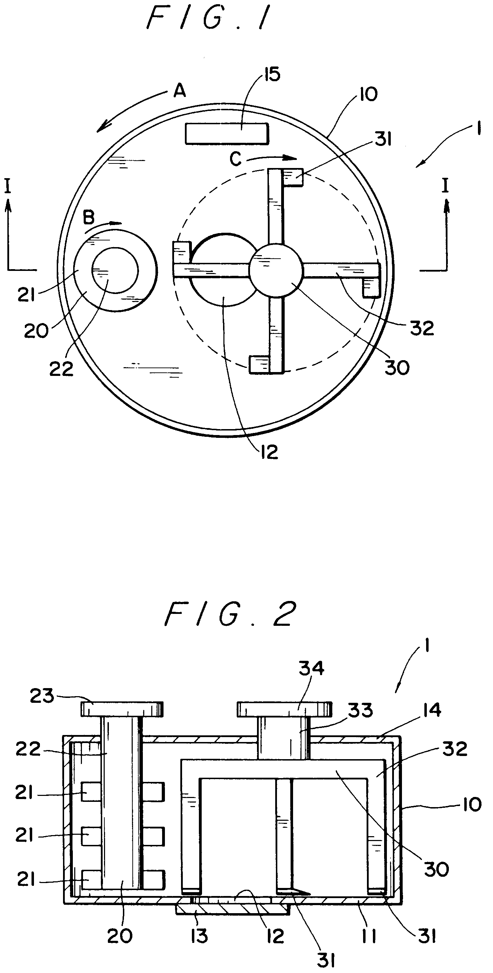

In Figs. 1 and 2, a granulator 1 basically has a structure of a mixing machine known as Eirich mixer, and comprises a bottomed cylindrical container 10, an agitator 20 and a mixing scraper 30.

The container 10 is rotated in the direction of the arrow A by a motor (not shown). A bottom 11 of the container is provided with an outlet 12, and the outlet 12 is provided with a lid 13. An upper surface plate 14 of the container 10 is provided with an inlet 15 for charging starting materials into the container, and to the plate are further fitted the agitator 20 and the mixing scraper 30 at the eccentric positions from the center of the rotation of the container 10 in such a manner that each of them is independently rotatable.

The agitator 20 has a blade 21, and a shaft 22 of the agitator is fitted to the upper surface plate 14 of the container 10 in such a manner that the shaft is hung down and rotatable. The agitator can be rotated in the direction of the arrow B (reverse direction of the rotational direction of the container 10) with a pulley 23 by a driving force of a motor (not shown), and the rotational speed of the agitator can be optionally controlled to be, for example, in the range of 0 to 2,500 m/min in terms of a blade-outer periphery speed thereof. As for the blade 21, a plurality of blades can be provided in the lengthwise direction of the the shaft 22 as shown in Fig. 2, but a blade of zoke type or H4 type in which a single blade is provided at the lowest part is employable.

The mixing scraper 30 has an arm 32 which is provided with a blade 31 on its tip, and an shaft 33 of the scraper is fitted to the upper surface plate 14 of the container 10 in such a manner that the shaft is hung down and rotatable. The mixing scraper can be rotated in the direction of the arrow C (reverse direction of the rotational direction of the container 10) with a pulley 34 by a driving force given by a motor (not shown), and the rotational speed of the scraper can be optionally controlled to be, for example, in the range of 0 to 300 m/min in terms of a blade-outer periphery speed thereof. The upper surface of the blade 31 is inclined towards the tip as shown in Fig. 2, so that the powder and the granules present on the bottom 11 of the container 10 can be scooped up by means of relative movement between the mixing scraper 30 and the container 10. The arm 32 of the mixing scraper 30 may be further provided with other blade (not shown) for scratching down the powder and the granules having adhered to the side wall of the container 10. There is no specific limitation with respect to the number of the arm 32, but generally 2 to 4 arms are provided.

The agitator 20 and the mixing scraper 30 are provided at such positions that they do not disturb in their respective rotations . The container 10 can be rotated in the horizontal state as shown in Fig. 2, or can be rotated in a tilted state.

The present invention will be described in detail hereinafter, referring to oxamide which is a typical example of water-sparingly soluble fertilizers used as starting material.

In the first place, an oxamide powder and water are charged into the container 10 of the above-mentioned granulator from the inlet 15 for introducing starting materials, rotating the container 10 at the predetermined speed (mentioned later). In this stage, the agitator 20 is not necessarily rotated, but preferably it is rotated at a low blade-outer periphery speed, for example, in the range of 200 - 500 m/min. The mixing scraper is not necessarily rotated either, but preferably it is rotated in the case that the granulator is a large one.

Oxamide is also referred to as diamide oxalate, and is known as an excellent slow release fertilizer because of its low solubility in water. The oxamide powder used in the invention preferably has a mean particle diameter of not larger than 1 mm, particularly not larger than 0.5 mm. The oxamide can be employed alone, or can be employed in the form of a mixture with other water-sparingly soluble fertilizer components such as magnesium ammonium phosphate, crotonylidene diurea (CDU), isobutyridene diurea (IB), fused phosphate and potassium silicate. The above-mentioned water-sparingly soluble fertilizer components other than the oxamide can be also employed singly in the present invention as a starting material. In the case of using a mixture of oxamide and other water-sparingly soluble fertilizer component in the present invention, the conditions of the present invention can be used by replacing the oxamide powder with the mixture, unless specifically described.

Water is charged into the container almost simultaneously with or after introduction of the oxamide powder.

With respect to a ratio between the amount of the oxamide powder and the amount of the water, the water preferably is in the range of 20 to 40 parts by weight, particularly in the range of 25 to 35 parts by weight, per 100 parts by weight of the oxamide powder.

When the oxamide powder and water are charged into the container 10, the container 10 is kept rotated at such rotational speed that the outer periphery speed thereof preferably is in the range of 20 to 150 m/min, more preferably is in the range of 30 to 120 m/min. If the mixing scraper 30 is rotated, the container is kept rotated at such rotational speed that the outer periphery speed thereof preferably is in the range of 30 to 200 m/min, more preferably is in the range of 50 to 150 m/min.

The rotation of the container 10 is continued until the granulation of the oxamide is complete. The mixing scraper 30 may be kept unrotated during the granulation stage of the oxamide. Otherwise, the mixing scraper may be continuously rotated until the granulation of the oxamide is complete, or may be rotated intermittently, if necessary. Even if the mixing scraper 30 itself is not rotated, the scraper serves to mix the powder and the granules by the rotation of the container 10. The agitator 20 is changed in the number of revolutions during the granulating process.

After introduction of the oxamide and water, the number of rotations of the agitator 20 is increased to 1,000 to 2,500 m/min in terms of the blade-outer periphery speed so as to rotate the agitator at a high speed. While the agitator 20 is rotated at a high speed, the oxamide powder is mixed and kneaded with the water to form granules.

If the number of rotations of the agitator 20 in the high-speed rotation procedure is smaller than the lower limit of the above range, mixing and kneading are not sufficient, whereby formation of the granules in spherical shapes is incompletely made in the subsequent granulation procedure, and therefore the aimed spherical granules cannot be obtained. For solving this problem, a long period of time is required for the mixing and kneading process, resulting in reduction of productivity. If the number of rotations of the agitator 20 is larger than the upper limit of the above range, a great power is needed, and the mixing and kneading time is not shortened so much in response to the increased power. Further, such excessive stirring causes insufficient production of granule cores required for the subsequent stage, resulting in reduction of the granulation yield.

The high-speed rotation of the agitator 20 is preferably carried out until most of the mixture of the oxamide powder and the water becomes granules having a major diameter of approx 0.5 to 3 mm. The size of the granules varies depending on the amount of water, driving conditions of the granulator, etc., but in general, the above-mentioned granules can be formed by conducting the high-speed rotation of the agitator 20 for 5 to 30 minutes. As the amount of the water is made larger or the number of rotations of the agitator 20 is made larger, the time for rotating the agitator 20 at a high speed can be shortened.

The ratio of the amount of the water to the amount of the oxamide is mentioned as above. If the amount of the water is larger than the upper limit of the aforementioned range, the mixture of the oxamide and the water tends to become large sized agglomerates, and the above-mentioned granules can be hardly obtained. In this case, the oxamide powder is further added to relatively decrease the amount of the water and the high-speed rotation of the agitator 20 is continued, whereby the granules of desired sizes can be obtained. If the amount of the water is smaller than the lower limit of the aforementioned range, the oxamide is not coagulated, and therefore granules of desired sizes cannot be obtained. In this case, water is further added and the high-speed rotation of the agitator 20 is continued.

After granules of desired sizes are formed by means of the high-speed rotation of the agitator 20, the number of rotations of the agitator 20 is decreased to 300 to 900 m/min in terms of the blade-outer periphery speed so as to perform a low-speed rotation of the agitator 20. Through the low-speed rotation of the agitator 20, the granules formed in the high-speed rotation stage are adjusted in size and shape to be converted into granules having relatively uniform diameters and nearly spherical shapes. The low-speed rotation of the agitator 20 is preferably carried out until most of the granules become granules having a major diameter of approx. 2 to 4 mm.

If the number of rotations of the agitator 20 in the low-speed rotation stage is smaller than the lower limit of the above-mentioned range, a long period of time is required for the granulation process, resulting in reduction of productivity. If the number of rotations thereof in the low-speed rotation stage is larger than the upper limit of the above-mentioned range, the granules are destroyed owing to shearing action to become smaller sized, and an yield of granules having the aimed diameter is reduced.

The number (rate) of rotation of the agitator 20 in the low-speed rotation procedure preferably is approx. 1/2 or less time as much as the number of rotations thereof in the high-speed rotation procedure. The size of the granules varies depending on the amount of water, driving conditions of the granulator, etc., but generally, granules having relatively uniform diameters mentioned as above can be formed by conducting the low-speed rotation of the agitator 20 for 3 to 30 minutes. As the amount of the water is made larger, or the number of rotations of the agitator 20 is made larger, or the diameters of the granules obtained by the high-speed rotation of the agitator 20 are larger, the time for rotating the agitator 20 at a low speed can be shortened.

With respect to the ratio between the amount of the oxamide powder and the water in the low-speed rotation procedure of the agitator 20, the amount of the water preferably is in the rage of 20 to 30 parts by weight, particularly is in the range of 22 to 28 parts by weight, per 100 parts by weight of the oxamide powder. If the amount of the water is larger than the upper limit of the above range, the granules adhere to each other to become large-sized agglomerates, and therefore an yield of granules having desired diameters is reduced. If the amount of the water is smaller than the lower limit of the above range, particles of the powder are not accelerated in bonding with each other so as to become small-sized granules, and therefore granules of desired diameters can be hardly obtained.

During the low-speed rotation of the agitator 20, an excess water sometimes oozes onto the surfaces of the granules, resulting in that the granules adhere to each other. In this case, the oxamide powder is further added in the low-speed rotation procedure of the agitator 20 to prevent formation of large-sized agglomerates.

When the lid 13 is opened after granules of desired sizes are formed as mentioned above, the granules gather to the center of the container 10 owing to the mutual action of the container 10 and the mixing scraper 30, and are discharged from the outlet 12.

The granules prepared as above are then dried at a temperature of 80 to 150 °C using conventionally used drying machines such as a rotary dryer, a fluid dryer and a thermostat box dryer, to obtain granules of oxamide.

The above-prepared oxamide granules are subjected to a sieving procedure according to necessity, to obtain granules having diameters of the desired range.

The water-sparingly soluble fertilizer granules prepared by the present invention have an average hardness (crushing strength) of not less than 1.0 kg when measured by a Kiya-model hardness meter, so that the fertilizer granules have such a hardness that they are satisfactory in ordinary handling in the distribution stages such as packing thereof and transportation thereof.

Further, the water-sparingly soluble fertilizer granules prepared by the present invention have a small repose angle and excellent fluidity, so that they are suitable for fertilization using machines.

The examples of the invention and a comparison example are given below.

### [Example 1]

Granules of oxamide were prepared using a granulator as shown in Fig.1 (diameter of the container 10: 800 mm, height thereof: 450 mm, useful capacity: 75 l, made of stainless steel).

22 kg of a dried oxamide powder (mean particle diameter: 0.1 mm) and 6.6 kg of water were charged into a container 10 of the granulator from an inlet 15 for charging starting materials, rotating the container 10 at an outer periphery speed of 58 m/min in the direction of the arrow A and rotating an agitator 20 at an outer periphery speed of 330 m/min in the direction of the arrow B without rotating a mixing scraper 30. The container 10 was kept rotated at the same speed and the mixing scraper was kept unrotated until the obtained oxamide granules were taken out of the granulator.

Then, the rate of rotations of the agitator 20 was increased to 1,650 m/min in terms of a blade-outer periphery speed thereof, and a high-speed rotation of the agitator 20 was carried out for 90 minutes in this state to mix and knead the oxamide and the water. Thus, granules having a major diameter of 0.5 to 3 mm, namely, granules having a wide diameter distribution, were formed.

Subsequently, the rate of rotations of the agitator 20 was decreased to 550 m/min in terms of a blade-outer periphery speed thereof, to perform a low-speed rotation of the agitator 20. The oxamide powder was further added in an amount of 1 kg every two minutes after the low-speed rotation of the agitator 20 was initiated, to prevent adherence of the granules to each other. The above-mentioned low-speed rotation of the agitator 20 was continued for 10 minutes.

In 30 minutes after each addition of the oxamide powder made 4 minutes, 6 minutes, 8 minutes and 10 minutes, respectively, after the low-speed rotation of the agitator 20 was initiated, granules were taken out of the container as samples. Each of the samples was dried at 100 °C for approx. 3 hours in a thermostat box dryer.

Each of the dried samples was sieved using a stainless sieve having an upper net of 4 mm in mesh and a lower net of 2 mm in mesh, and the grain size distribution of each sample was measured.

The granules having a diameter of 2 to 4 mm obtained by the above sieving were referred to as a granular product, and the granular product was measured on hardness and repose angle. The hardness was measured using a Kiya-model hardness meter, and the repose angle was measured based on an extraction method.

With respect to each sample, the granulation conditions, water content in the granules prior to the drying procedure, grain size distribution of the granules, hardness thereof and repose angle thereof are set forth in Table 1.

### [Example 2]

Dried granules of oxamide were prepared in the same manner as that of Example 1 except that the charging amount of water was varied to 5.5 kg, the time for the high-speed rotation of the agitator was varied to 10 minutes, the time for the low-speed rotation of the agitator was varied to 20.5 minutes, and 1 kg of the aforementioned oxamide powder was added 30 seconds before the low-speed rotation of the agitator was completed.

The grain size distribution of the dried granules, hardness thereof and repose angle thereof were measured in the same manner as that of Example 1.

With respect to the obtained granules, granulation conditions, water content in the granules prior to the drying procedure, grain size distribution of the granules, hardness thereof and repose angle thereof are set forth in Table 1.

### [Example 3]

Dried granules of oxamide were prepared in the same manner as that of Example 1 except that the charging amount of water is varied to 5.5 kg, the time for the high-speed rotation of the agitator was varied to 30 minutes, the time for the low-speed rotation of the agitator was varied to 20.5 minutes, and 1 kg of the aforementioned oxamide powder was added 30 seconds before the low-speed rotation of the agitator was completed.

The grain size distribution of the dried granules, hardness thereof and repose angle thereof were measured in the same manner as that of Example 1.

With respect to the obtained granules, granulation conditions, water content in the granules prior to the drying procedure, grain size distribution of the granules, hardness thereof and repose angle thereof are set forth in Table 1.

### [Example 4]

Dried granules of oxamide were prepared in the same manner as that of Example 1 except that the charging amount of water is varied to 7.7 kg, the time for the high-speed rotation of the agitator was varied to 6 minutes, 2 kg of the aforementioned oxamide powder was added when the low-speed rotation of the agitator was initiated, every one minute thereafter 2 kg of the oxamide powder was added, and sampling of the granules was conducted 2.5 minutes and 4.5 minutes after the low-speed rotation of the agitator was initiated.

The grain size distribution of the dried granules, hardness thereof and repose angle thereof were measured in the same manner as that of Example 1.

With respect to the dried samples, the granulation conditions, water content in the granules prior to the drying procedure, grain size distribution of the granules, hardness thereof and repose angle thereof are set forth in Table 1.

### [Example 5]

Granules of oxamide were prepared using a granulator as shown in Fig.1 (diameter of the container 10: 1.400 mm, height thereof: 630 mm, useful capacity: 500 l, made of stainless steel).

200 kg of the same dried oxamide powder as used in Example 1 and 60 kg of water were charged into a container 10 of the granulator from an inlet 15 for charging starting materials, rotating the container 10 at an outer periphery speed of 44 m/min in the direction of the arrow A, rotating an agitator 20 at an outer periphery speed of 380 m/min in the direction of the arrow B and rotating a mixing scraper 30 at an outer periphery speed of 106 m/min in the direction of an arrow C. The container 10 and the mixing scraper were kept rotated at the same speeds as mentioned above until the obtained oxamide granules were taken out of the granulator.

Then, the number of rotations of the agitator 20 was increased to 1,880 m/min in terms of a blade-outer periphery speed thereof, and a high-speed rotation of the agitator 20 was carried out for 90 minutes in this state to mix and knead the oxamide and the water. Thus, granules having a major diameter of 0.5 to 3 mm, namely, granules having a wide diameter distribution, were formed.

Subsequently, the number of revolutions of the agitator 20 was decreased to 630 m/min in terms of a blade-outer periphery speed thereof, to perform a low-speed rotation of the agitator 20. In order to prevent adhesion of the granules to each other, 10 kg of the above-mentioned oxamide powder was further added when the low-speed rotation of the agitator 20 was initiated, and every 2 minutes thereafter the oxamide powder was added in an amount of 10 kg. The above-mentioned low-speed rotation of the agitator 20 was carried out for 8 minutes.

At 30 minutes after each addition of the oxamide powder made 4 minutes, 6 minutes and 8 minutes, respectively, after the low-speed rotation of the agitator 20 was initiated, granules were taken out of the container as samples. Each of the samples was dried at 100 °C for approx. 3 hours in a thermostat box dryer.

The grain size distribution of the dried samples, hardness thereof and repose angle thereof were measured in the same manner as that of Example 1.

With respect to each sample, the granulation conditions, water content in the granules prior to the drying procedure, grain size distribution of the granules, hardness thereof and repose angle thereof are set forth in Table 1.

### [Example 6]

Dried granules of oxamide were prepared in the same manner as that of Example 5 except that the number of rotations of the agitator in the high-speed rotation was varied to 1,260 m/min in terms of a blade-outer periphery speed thereof and the time for the high-speed rotation was varied to 12 minutes.

The grain size distribution of the dried granules, hardness thereof and repose angle thereof were measured in the same manner as that of Example 1.

With respect to the obtained granules, granulation conditions, water content in the granules prior to the drying procedure, grain size distribution of the granules, hardness thereof and repose angle thereof are set forth in Table 1.

### [Comparison Example 1]

1 kg of the same dried oxamide powder as used in Example 1 and 360 g of water were charged into a twin-screw kneader (MH-S type, produced by Jushin Tekkosho Co., Ltd., made of stainless steel, inner width: 190 mm, inner diameter: 140 mm, internal height: 195 mm, actual capacity: 3 l), and they were mixed and kneaded in the kneader for 5 minutes. Thus obtained kneadate was then charged into a tilted plate type granulator provided with rotation-controlling mechanism (diameter: 500 mm, depth: 100 mm, made of stainless steel), and was subjected to rolling granulating process, rotating the granulator at the number of revolutions of 15 r.p.m. for 15 minutes. The charging of the kneadate into the tilted plate type granulator was conducted in such a manner that approx. 2/3 of the whole kneadate was first charged and approx. 1/3 of the kneadate was charged in several times in a small amount, to prevent adherence of granules to each other accompanied by proceeding of the granulation.

The obtained granules were dried in the same manner as that of Example 1, and the grain size distribution of the dried granules, hardness thereof and repose angle thereof were measured in the same manner as that of Example 1.

With respect to the obtained granules, granulation conditions, water content in the granules prior to the drying procedure, grain size distribution of the granules, hardness thereof and repose angle thereof are set forth in Table 1.

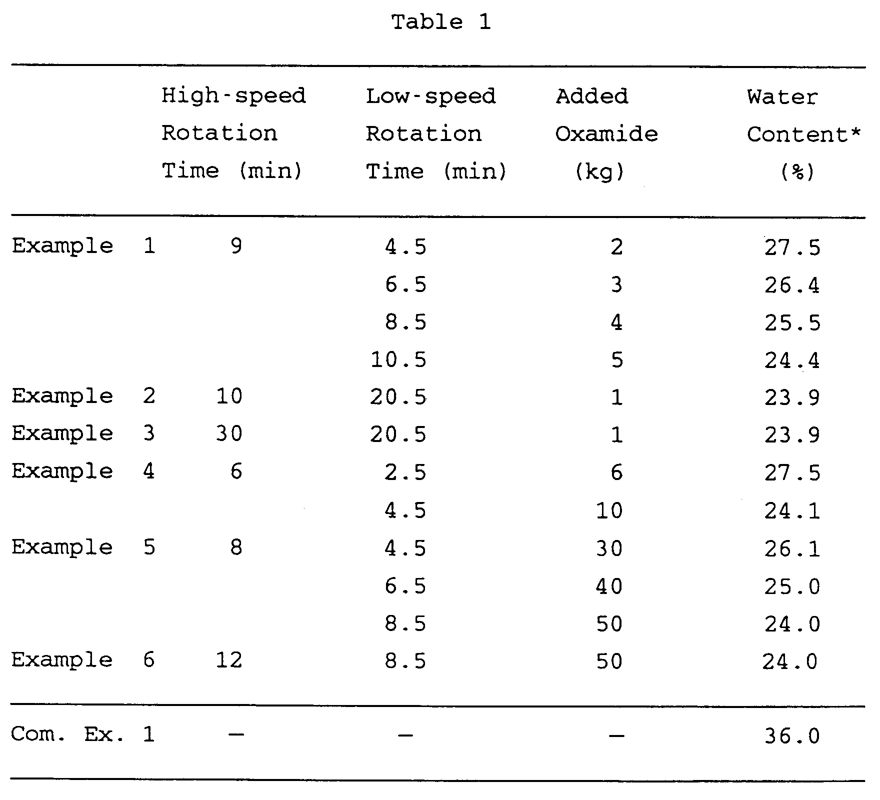

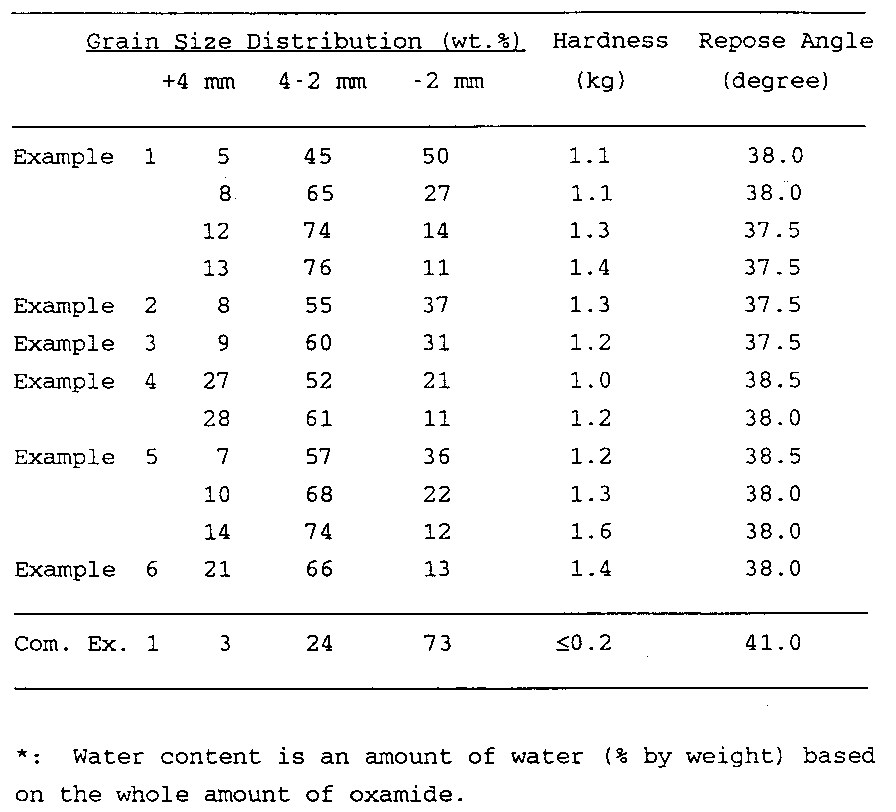

## Claims

1. A process for preparing water-sparingly soluble fertilizer granules, at least 45 weight % of which have a grain size of 2-4 mm, comprising the steps of:
charging a water-sparingly soluble fertilizer powder and water into a granulator comprising at least a bottomed cylindrical container which is rotatable and has an outlet at the center of the bottom, an agitator provided in the container at an eccentric position from the rotational center of the container, and a mixing scraper arranged in the container eccentrically from the rotational center of the container so that it does not disturb the rotation of the agitator;
rotating the container with rotating the agitator at a high outer periphery speed of not lower than 1,000 m/min. reversely of the rotation of the container and keeping the mixing scraper unrotated or rotating it reversely of the rotation of the container to mix and knead the powder with the water so as to produce granules;
then rotating the agitator at a low outer periphery speed of not higher than 900 m/min. reversely of the rotation of the container to adjust the size of the granules to form water-sparingly soluble fertilizer granules of desired size; and
then drying the granules.

2. The process of claim 1, wherein the rotational speed of the container is in the range of 20 to 150 m/min. in terms of an outer periphery speed thereof, the rotational speed of the mixing scraper is in the range of 0 to 300 m/min. in terms of an outer periphery speed thereof.

3. The process of claim 1, wherein the high outer periphey speed of the agitator is in the range of 1,000 to 2,500 m/min.

4. The process of claim 1, wherein the low outer periphey speed of the agitator is in the range of 300 to 900 m/min.

5. The process of claim 1, wherein a mean particle diameter of the powder to be charged is not more than 1 mm.

6. The process of claim 1, wherein the fertilizer powder is powdery oxamide.

7. The process of claim 1, wherein the water is charged in an amount of 20 to 40 parts by weight per 100 parts by weight of the fertilizer powder.

## Patentansprüche

1. Verfahren zur Herstellung von gering wasserlöslichen Düngemittel-Granulaten, von denen mindestens 45 Gew.-% eine Korngröße von 2 bis 4 mm haben, umfassend die Stufen:
Einbringen eines gering wasserlöslichen Düngemittel-Pulvers und Wasser in einen Granulator mit mindestens einem zylindrischen, mit einem Boden versehenen Behälter, der drehbar ist und in der Mitte des Bodens einen Auslaß hat, einem Rührer, der in dem Behälter in exzentrischer Position von dem Rotationszentrum des Behälters angeordnet ist, und einem Mischschaber, der in dem Behälter exzentrisch von dem Rotationszentrum des Behälters so angeordnet ist, daß er die Drehung des Rührers nicht stört;
Rotieren des Behälters unter Rotieren des Rührers mit einer hohen Außenumfangsgeschwindigkeit von nicht weniger als 1000 m/min in Gegenrichtung zu der Rotation des Behälters, wobei der Mischschaber nichtrotierend ist oder in Gegenrichtung zur Rotation des Behälters rotiert, um das Pulver mit dem Wasser so zu vermischen und zu verkneten, daß Granulate erzeugt werden;
anschließendes Rotieren des Rührers mit einer niedrigen Außenumfangsgeschwindigkeit von nicht höher als 900 m/min in Gegenrichtung zu der Rotation des Behälters, um die Größe der Körner so einzustellen, daß gering wasserlösliche Düngemittel-Granulate der gewünschten Größe gebildet werden; und
anschließendes Trocknen der Granulate.

2. Verfahren nach Anspruch 1, dadurch **gekennzeichnet,** daß die Rotationsgeschwindigkeit des Behälters im Bereich von 20 bis 150 m/min, ausgedrückt als Außenumfangsgeschwindigkeit, ist, wobei die Rotationsgeschwindigkeit des Mischschabers im Bereich von 0 bis 300 m/min, ausgedrückt als Außenumfangsgeschwindigkeit, liegt.

3. Verfahren nach Anspruch 1, dadurch **gekennzeichnet,** daß die hohe Außenumfangsgeschwindigkeit des Rührers im Bereich von 1000 bis 2500 m/min liegt.

4. Verfahren nach Anspruch 1, dadurch **gekennzeichnet,** daß die niedrige Außenumfangsgeschwindigkeit des Rührers im Bereich von 300 bis 900 m/min liegt.

5. Verfahren nach Anspruch 1, dadurch **gekennzeichnet,** daß der mittlere Teilchendurchmesser des einzutragenden Pulvers nicht mehr als 1 mm beträgt.

6. Verfahren nach Anspruch 1, dadurch **gekennzeichnet,** daß das Düngemittel-Pulver Oxamidpulver ist.

7. Verfahren nach Anspruch 1, dadurch **gekennzeichnet,** daß man das Wasser in einer Menge von 20 bis 40 Gew.-Teilen pro 100 Gew.-Teile Düngemittel-Pulver einbringt.

## Revendications

1. Procédé pour préparer des granules d'engrais difficilement solubles dans l'eau dont au moins 45 % en masse ont une taille de grain de 2 à 4 mm, comprenant les étapes consistant à :
introduire une poudre d'engrais difficilement soluble dans l'eau et de l'eau dans un granulateur comprenant au moins un récipient cylindrique à fond qui peut tourner et qui a une sortie au centre du fond, un agitateur prévu dans le récipient en une position excentrée par rapport au centre de rotation du récipient et un racleur mélangeur disposé dans le récipient de manière excentrée par rapport au centre de rotation du récipient de manière qu'il ne perturbe pas la rotation de l'agitateur ;
faire tourner le récipient avec rotation de l'agitateur à une vitesse périphérique externe élevée d'au moins 1 000 m/min en sens inverse de la rotation du récipient et maintenir le racleur mélangeur sans rotation ou le faire tourner en sens inverse de la rotation du récipient pour mélanger et malaxer la poudre avec l'eau de manière à produire des granules ;
puis faire tourner l'agitateur à une vitesse périphérique externe basse d'au plus 900 m/min en sens inverse de la rotation du récipient pour ajuster la taille des granules pour former des granules d'engrais difficilement solubles dans l'eau de taille voulue ;
puis sécher les granules.

2. Procédé selon la revendication 1, dans lequel la vitesse de rotation du récipient est située dans le domaine de 20 à 150 m/min en termes de vitesse périphérique externe du récipient, la vitesse de rotation du racleur mélangeur est située dans le domaine de 0 à 300 m/min en termes de vitesse périphérique externe de celui-ci.

3. Procédé selon la revendication 1, dans lequel la vitesse périphérique externe élevée de l'agitateur est située dans le domaine de 1 000 à 2 500 m/min.

4. Procédé selon la revendication 1, dans lequel la vitesse périphérique externe basse de l'agitateur est située dans le domaine de 300 à 900 m/min.

5. Procédé selon la revendication 1, dans lequel le diamètre moyen de particule de la poudre qui doit être introduite n'est pas supérieur à 1 mm.

6. Procédé selon la revendication 1, dans lequel la poudre d'engrais est de l'oxamide pulvérulent.

7. Procédé selon la revendication 1, dans lequel l'eau est introduite en une quantité de 20 à 40 parties en masse pour 100 parties en masse de poudre d'engrais.
